# EUROPÄISCHE PATENTSCHRIFT

(11) **EP 3 701 173 B1**
(45) Veröffentlichungstag und Bekanntmachung des Hinweises auf die Patenterteilung: **15.03.2023**
(21) Anmeldenummer: 18782045.1
(22) Anmeldetag: 01.10.2018
(51) Int. Cl.: F16J 15/34

(54) **GASGESCHMIERTE GLEITRINGDICHTUNG MIT VERBESSERTEM VERSCHMUTZUNGSSCHUTZ**
GAS-LUBRICATED SLIDE RING SEAL WITH IMPROVED ANTI-FOULING PROTECTION
JOINT D'ÉTANCHÉITÉ À BAGUE DE GLISSEMENT LUBRIFIÉ AU GAZ ET PRÉSENTANT UNE MEILLEURE PROTECTION CONTRE L'ENCRASSEMENT

(30) Priorität: 26.10.2017 DE 102017219190
(43) Veröffentlichungstag der Anmeldung: 02.09.2020
(73) Patentinhaber: EagleBurgmann Germany GmbH & Co. KG, 82515 Wolfratshausen (DE)
(72) Erfinder: WERDECKER, Ferdinand, 82432 Walchensee (DE); SCHRÜFER, Andreas, 82515 Wolfratshausen (DE); FESL, Andreas, 83624 Otterfing (DE); STROBL, Josef, 83700 Rottach Egern (DE); ROSSI, Giuliano, 85764 Oberschleissheim (DE)
(74) Vertreter: Hoefer & Partner Patentanwälte mbB
(86) Internationale Anmeldenummer: PCT/EP2018/076680
(87) Internationale Veröffentlichungsnummer: WO 2019/081166

(56) Entgegenhaltungen:
- DE-A1- 3 533 829
- DE-U1-202010 000 954
- DE-U1-202010 000 954

## Beschreibung

Die Erfindung betrifft eine gasgeschmierte Gleitringdichtungsanordnung, welche ein gasförmiges Fluid als Sperrmedium verwendet, wobei die Gleitringdichtungsanordnung einen verbesserten Verschmutzungsschutz aufweist.

Gasgeschmierte Gleitringdichtungen werden beispielsweise bei Verdichtern zur Abdichtung einer Antriebswelle des Verdichters verwendet. Als Sperrmedium zur Abdichtung am Dichtspalt zwischen dem rotierenden und dem stationären Gleitring wird bei gasgeschmierten Gleitringen ein gasförmiges Fluid, beispielsweise Luft oder Stickstoff, verwendet. Im Betrieb der Gleitringdichtungsanordnung können Schmutzteilchen in Form von kleinen Festkörpern oder dgl. an den Dichtspalt gelangen und die Gleitflächen des rotierenden und/oder stationären Gleitrings beschädigen. Hierdurch wird eine Lebensdauer der Gleitringdichtung reduziert. Ferner ist aus der DE 20 2010 000 954 U1 eine Gleitringdichtungsanordnung gemäß dem Oberbegriff des Anspruchs 1 bekannt. Weiterhin ist aus der DE 35 33 829 A1 eine gasgeschmierte Gleitringdichtungsanordnung bekannt, welche die Gleitflächen bei niedrigen Drehzahlen außer Eingriff bringt.

Es ist daher Aufgabe der vorliegenden Erfindung, eine Gleitringdichtungsanordnung bereitzustellen, welche bei einfachem Aufbau und einfacher, kostengünstiger Herstellbarkeit einen verbesserten Schutz vor Verschmutzungen ermöglicht. Ferner ist es Aufgabe der Erfindung, einen Verdichter mit einer Gleitringdichtungsanordnung mit verlängerter Lebensdauer bereitzustellen.

Diese Aufgabe wird durch eine Gleitringdichtungsanordnung mit den Merkmalen des Anspruchs 1 und einen Verdichter mit den Merkmalen des Anspruchs 11 gelöst. Die Unteransprüche zeigen jeweils bevorzugte Weiterbildungen der Erfindung.

Die erfindungsgemäße gasgeschmierte Gleitringdichtungsanordnung mit den Merkmalen des Anspruches 1 weist den Vorteil auf, dass ein verbesserter Schmutzschutz möglich ist, so dass ein Einbringen von Festkörperteilchen wie Staub oder kleinen Partikeln oder dgl. in einen Dichtspalt zwischen einem rotierenden und einem stationären Gleitring vermieden werden kann. Hierdurch kann ein deutlich sicherer Betrieb der Gleitringdichtungsanordnung erreicht werden, wodurch auch eine Lebensdauer der Gleitringdichtungsanordnung vergrößert wird. Dies wird erfindungsgemäß dadurch erreicht, dass die gasgeschmierte Gleitringdichtungsanordnung eine Gleitringdichtung mit rotierendem und stationärem Gleitring aufweist, welche zwischen sich den Dichtspalt definieren. Ferner ist eine Vorspanneinrichtung vorgesehen, welche den stationären Gleitring in Richtung des rotierenden Gleitrings vorspannt. Weiterhin ist ein Fluidraum vorgesehen, in welchem ein gasförmiges Fluid zuführbar ist, wobei das gasförmige Fluid als Sperrmedium für die Gleitringdichtung verwendet wird und dem Dichtspalt zugeführt wird. Weiterhin umfasst die Gleitringdichtungsanordnung einen ersten Gleitringträger zum Halten des rotierenden Gleitrings, wobei der erste Gleitringträger eine erste Axialfläche aufweist, und einen zweiten Gleitringträger zum Halten des stationären Gleitrings, wobei der zweite Gleitringträger eine zweite Axialfläche aufweist. Der zweite Gleitringträger und der stationäre Gleitring sind dabei gemeinsam auf einer Verschiebefläche in Axialrichtung der Gleitringdichtungsanordnung verschiebbar angeordnet. Weiterhin wird ein Axialspalt durch die erste und zweite Axialfläche begrenzt. Der Axialspalt ist dabei senkrecht zu einer Mittelachse der Gleitringdichtungsanordnung ausgerichtet. Weiterhin ist ein Vorraum am Dichtspalt der Gleitringdichtung ausgebildet, wobei der Vorraum über den Axialspalt mit dem Fluidraum verbunden ist. Somit kann durch das Vorsehen des zusätzlichen Axialspalts in einem Strömungsweg des gasförmigen Fluids vom Fluidraum in Richtung zum Dichtspalt verhindert, dass Schmutzteilchen, welche im gasförmigen Fluid vorhanden sein können, bis zum Dichtspalt gelangen können. Da der erste Gleitringträger, welcher den rotierenden Gleitring hält, gemeinsam mit dem rotierenden Gleitring rotiert, wird im Betrieb der Gleitringdichtungsanordnung ein Eindringen von Feststoffen in den Axialspalt deutlich erschwert, da durch die Rotation Fliehkräfte im Wesentlichen nach außen erzeugt werden, wodurch Schmutzteilchen o.ä. vom Axialspalt weggeschleudert werden. Damit ist ein Weg von Festkörperteilchen in Richtung zum Dichtspalt deutlich erschwert.

Weiter bevorzugt umfasst die Gleitringdichtungsanordnung eine Hülse, welche eine zylindrische Außenfläche aufweist, die die Verschiebefläche bildet, auf welcher der zweite Gleitringträger und der stationäre Gleitring gemeinsam in Axialrichtung verschiebbar angeordnet sind. Alternativ bevorzugt kann die Verschiebefläche auch an einem Gehäuse angeordnet sein.

Weiter bevorzugt umfasst die Gleitringdichtungsanordnung einen Druckausgleichsraum, welcher über einen ersten Radialspalt mit dem Fluidraum verbunden ist. Über den Druckausgleichsraum kann am stationären Gleitring ein Druckausgleich erfolgen. Hierdurch kann insbesondere bei einem Anlauf der Gleitringdichtung aus dem Stillstand ein im Dichtspalt aufzubauender Druck gering gehalten werden.

Weiter bevorzugt umfasst die Gleitringdichtungsanordnung ferner eine Schutzkante, welche radial außerhalb und über dem Axialspalt angeordnet ist. Hierdurch wird zusätzlich verhindert, dass Feststoffteilchen, welche im gasförmigen Fluid, das als Sperrmedium dient, vorhanden sein können, in Richtung zum Dichtspalt der Gleitringdichtung gelangen können. Die Schutzkante ist vorzugsweise am ersten Gleitringträger oder am zweiten Gleitringträger oder sowohl am ersten als auch am zweiten Gleitringträger vorgesehen.

Gemäß einer weiteren bevorzugten Ausgestaltung der vorliegenden Erfindung ist ein Verhältnis einer Länge L des Axialspalts zu einer Breite B des Axialspalts größer oder gleich 2:1. Hierdurch wird sichergestellt, dass die Länge des Axialspalts immer deutlich größer als die Breite ist, wodurch das Eindringen von Feststoffteilchen in den Axialspalt erschwert wird.

Vorzugsweise umfasst die Gleitringdichtungsanordnung ferner eine Ablaufrinne, welche an einem Außenumfang des zweiten Gleitringträgers angeordnet ist. Die Ablaufrinne stellt dabei sicher, dass bei einem Stillstand der Vorrichtung, in welcher die Gleitringdichtungsanordnung angeordnet ist, Medium, insbesondere ein aus dem gasförmigen Fluid stammendes Kondensat entlang des Außenumfangs in der Ablaufrinne nach unten ablaufen kann. Hierdurch kann das Kondensat beispielsweise an einem Auslass sicher abgelassen werden.

Besonders bevorzugt ist die Vorspanneinrichtung zur Vorspannung des stationären Gleitrings in Richtung zum rotierenden Gleitring ein Federelement. Das Federelement ist einfach und kostengünstig bereitstellbar. Besonders bevorzugt ist das Federelement zwischen einem Gehäuse und dem zweiten Gleitringträger, welcher den stationären Gleitring hält, angeordnet.

Der Druckausgleichsraum hat ferner den Vorteil, dass im Falle von Axialbewegungen einer rotierenden Welle, auf welcher der rotierende Gleitring beispielsweise über Wellenhülse oder direkt angeordnet ist, ein unmittelbares Nachrücken des stationären Gleitrings möglich ist. Da der Axialspalt zwischen der ersten und zweiten Axialfläche am ersten und zweiten Gleitringträger gebildet ist, wird auch bei einer Axialbewegung des rotierenden Gleitrings infolge eines Stoßes oder dgl. ein Kontakt zwischen dem ersten und zweiten Gleitringträger am Axialspalt vermieden. Der Axialspalt kann auch im Betrieb in jeder Betriebssituation aufrechterhalten werden.

Für einen besonders einfachen und kompakten Aufbau weist der zweite Gleitringträger bevorzugt eine topfförmige Gestalt auf. Weiter bevorzugt umfasst die Gleitringdichtungsanordnung ferner eine Nebendichtung, welche an der Verschiebefläche abdichtet. Die Nebendichtung ist daher bevorzugt derart ausgebildet, dass eine gemeinsame Bewegung auf der Verschiebefläche mit dem zweiten Gleitringträger und dem stationären Gleitring möglich ist.

Gemäß einer weiteren bevorzugten Ausgestaltung der Erfindung ist zwischen dem Axialspalt und dem Vorraum am Dichtspalt der Gleitringdichtung ein zweiter Radialspalt angeordnet. Der zweite Radialspalt stellt eine weitere Sicherheitseinrichtung vor einer Verschmutzung des Dichtspalts mit Feststoffteilchen dar. Dadurch kann die Gleitringdichtungsanordnung nach besser gegen Schmutz geschützt werden.

Besonders bevorzugt ist eine zweite Breite des Radialspalts gleich einer ersten Breite des Axialspalts.

Ferner betrifft die vorliegende Erfindung einen Verdichter zum Komprimieren eines gasförmigen Fluids, umfassend eine Gleitringdichtungsanordnung gemäß der vorliegenden Erfindung. Der Verdichter ist vorzugsweise ein Radialverdichter. Besonders bevorzugt wird dabei gasförmiges Fluid, welches vom Verdichter verdichtet wurde, abgezweigt und dem Fluidraum zugeführt. Somit kann das schon vorhandene gasförmige Fluid am Verdichter auch als Sperrmedium zum Betrieb der Gleitringdichtungsanordnung verwendet werden. Hierzu ist keine separate Sperrfluidversorgung möglich. Somit besteht eine höhere Gefahr einer Verschmutzung des gasförmigen Fluids. Es sei jedoch angemerkt, dass es auch vorgesehen sein kann, dass das gasförmige Fluid, welches als Sperrmedium der Gleitringdichtung verwendet wird, durch einen separaten Sperrmediumkreislauf bereitgestellt wird.

Nachfolgend werden unter Bezugnahme auf die begleitende Zeichnung bevorzugte Ausführungsbeispiele der Erfindung im Detail beschrieben. In der Zeichnung ist:
- Fig. 1: eine schematische Schnittansicht eines Verdichters mit einer gasgeschmierten Gleitringdichtungsanordnung gemäß einem ersten Ausführungsbeispiel der Erfindung,
- Fig. 2: eine vergrößerte Teilschnittansicht der Gleitringdichtungsanordnung von Fig. 1,
- Fig. 3: eine schematische Ansicht eines Verdichters mit einer Gleitringdichtungsanordnung gemäß einem zweiten Ausführungsbeispiel der Erfindung, und
- Fig. 4: eine schematische Ansicht eines Verdichters mit einer Gleitringdichtungsanordnung gemäß einem dritten Ausführungsbeispiel der Erfindung.

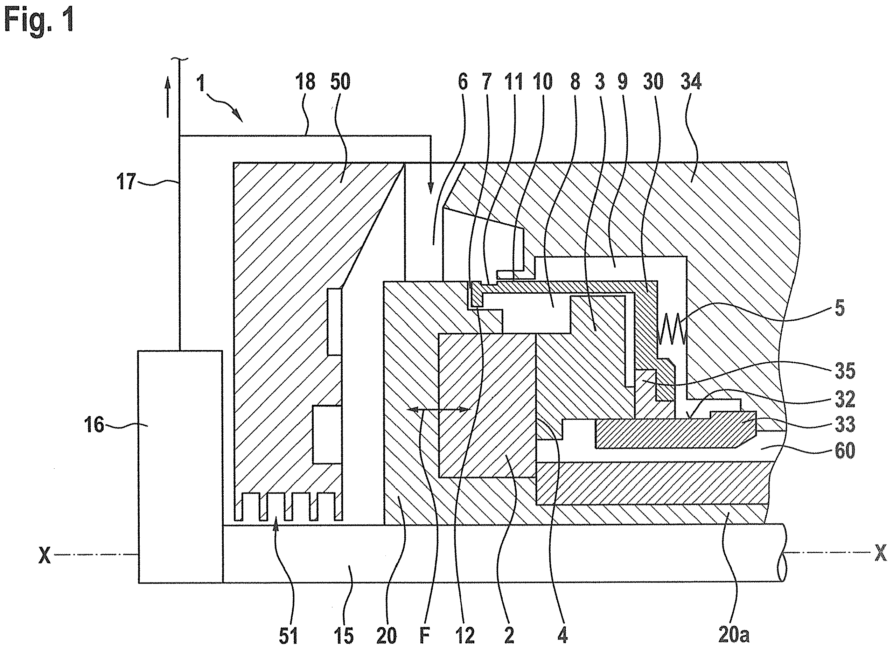

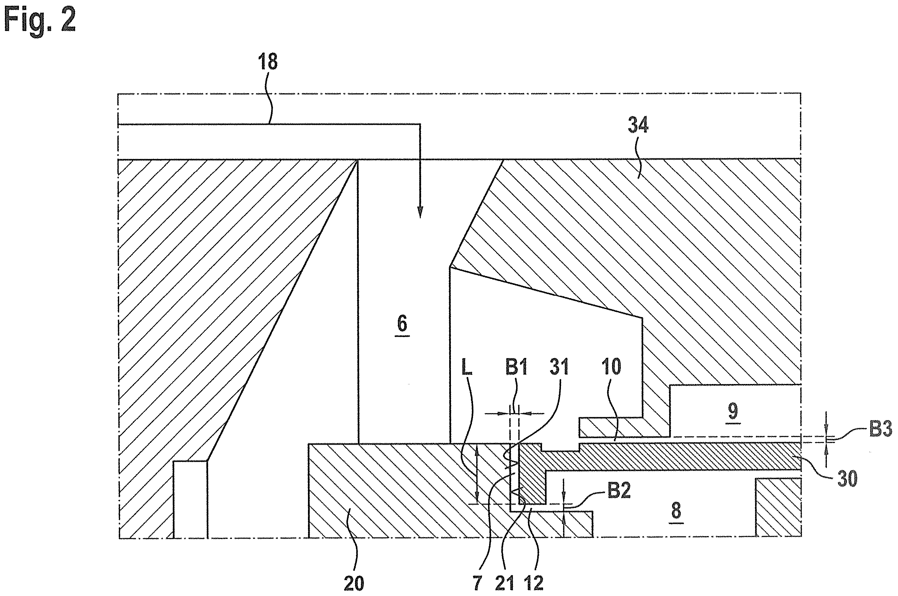

Nachfolgend wird unter Bezugnahme auf die Fig. 1 und 2 eine Gleitringdichtungsanordnung 1 gemäß einem ersten bevorzugten Ausführungsbeispiel der Erfindung im Detail beschrieben. Die Gleitringdichtungsanordnung 1 dichtet dabei einen Fluidraum 6 gegenüber einer Atmosphäre 60 ab.

Wie aus Fig. 1 ersichtlich ist, ist die Gleitringdichtung 1 dabei an einer rotierenden Welle 15 angeordnet und dichtet an einem Verdichter 16 ab. Der Verdichter verdichtet ein gasförmiges Fluid, welches über eine Druckleitung 17 zu einem Verbraucher geführt wird. Von der Druckleitung 17 zweigt eine Abzweigungsleitung 18 ab, welche zu einem Fluidraum 6 an der Gleitringdichtungsanordnung 1 führt.

Die Gleitringdichtungsanordnung 1 umfasst eine Gleitringdichtung mit einem rotierenden Gleitring 2 und einem stationären Gleitring 3, welche zwischen sich einen Dichtspalt 4 definieren.

Die Gleitringdichtung dichtet dabei den Fluidraum 6 gegenüber der Atmosphäre 60 ab.

Der rotierende Gleitring 2 wird mittels eines ersten Gleitringträgers 20 gehalten. Der erste Gleitringträger 20 ist dabei über einen Hülsenabschnitt 20a direkt auf der Welle 15 befestigt. Der erste Gleitringträger 20 umgibt dabei teilweise den rotierenden Gleitring 2. Der stationäre Gleitring 3 ist mittels eines zweiten Gleitringträgers 30 gehalten. Hierbei ist ein ringförmiges Nebendichtelement 35 vorgesehen, welches zwischen dem zweiten Gleitringträger 30 und dem stationären Gleitring 3 angeordnet ist.

Wie aus Fig. 1 ersichtlich ist, sind der stationäre Gleitring 3 und das Nebendichtelement 35 gleitbeweglich auf einer Verschiebefläche 32 einer Hülse 33 angeordnet. Die Hülse 33 ist ortsfest am Gehäuse 34 fixiert. Die Verschiebefläche 32 ist in diesem Ausführungsbeispiel eine zylindrische Fläche, wodurch ein axiales Nachsetzen des stationären Gleitrings 3 bei Axialbewegungen des rotierenden Gleitrings 2 ermöglicht wird.

Über eine Vorspanneinrichtung 5, welche in diesem Ausführungsbeispiel ein Federelement ist, wird der stationäre Gleitring 3 in Axialrichtung X-X gegenüber dem rotierenden Gleitring 2 vorgespannt. Die Vorspanneinrichtung 5 ist dabei zwischen dem Gehäuse 34 und dem stationären zweiten Gleitringträger 30 angeordnet.

Wie weiter aus Fig. 1 ersichtlich ist, ist benachbart zum Dichtspalt 4 ein Vorraum 8 angeordnet. Ferner ist auch ein Druckausgleichsraum 9 vorgesehen, welcher, wie aus Fig. 1 ersichtlich ist, bis zu einer Rückseite des zweiten Gleitringträgers 30 verläuft. Im Druckausgleichsraum 9 ist in diesem Ausführungsbeispiel die Vorspanneinrichtung 5 angeordnet.

Der Vorraum 8 ist dabei über einen Axialspalt 7 mit dem Fluidraum 6 verbunden. Der Axialspalt 7 ist im Detail aus Fig. 2 ersichtlich. Der Axialspalt 7 wird dabei durch eine erste Axialfläche 21 des ersten Gleitringträgers 20 und einer zweiten Axialfläche 31 des stationären zweiten Gleitringträgers 30 gebildet. Der Axialspalt 7 weist dabei eine erste Breite B1 auf. Ferner weist der Axialspalt 7 eine Länge L in radialer Richtung auf. Der Axialspalt 7 definiert somit einen Abstand zwischen der ersten Axialfläche 21 und der zweiten Axialfläche 31, welcher immer größer ist als der Dichtspalt 4 zwischen dem rotierenden und stationären Gleitring.

Ein Verhältnis der Länge L zur ersten Breite B1 des Axialspalts 7 ist dabei größer oder gleich 2. Wie aus Fig. 2 ersichtlich ist, ist der Axialspalt 7 ausschließlich in radialer Richtung zur Axialrichtung X-X gebildet.

Wie weiter aus den Fig. 1 und 2 ersichtlich ist, ist zwischen dem Fluidraum 6 und dem Druckausgleichsraum 9 ferner ein erster Radialspalt 10 vorgesehen. Der erste Radialspalt 10 weist eine konstante Breite B3 auf. Diese Breite B3 ist vorzugsweise kleiner der zweiten Breite B2 des Radialspalts 12. Die Breite B3 ist dabei möglichst klein, um eine Strömung des Fluids in den Druckausgleichsraum 9 zu minimieren und eine weitgehende Entkopplung des Druckausgleichsraums 9 vom Fluidraum 6 zu erreichen. Hierdurch wird insbesondere verhindert, dass Schmutzteilchen oder dgl. in den Druckausgleichsraum 9 gelangen.

Ferner ist im Fluidweg vom Fluidraum 6 zum Vorraum 8 ein zweiter Radialspalt 12 vorgesehen, welcher mit einer konstanten zweiten Breite B2 in Axialrichtung X-X verläuft. Die zweite Breite B2 ist dabei gleich der ersten Breite B1 des Axialspalts 7.

Wie weiter aus Fig. 1 ersichtlich ist, ist der Axialspalt 7 in Axialrichtung X-X versetzt zum Dichtspalt 4 angeordnet.

Somit ist der Vorraum 8 über den zweiten Radialspalt 12 und dem Axialspalt 7 mit dem Fluidraum 6 verbunden.

Da sowohl der Axialspalt 7 als auch der zweite Radialspalt 12 zwischen dem ersten Gleitringträger 20 und dem zweiten Gleitringträger 30 ausgebildet sind, ist eine Herstellung dieser Spaltanordnung besonders kostengünstig.

Im Betrieb können nun aufgrund von bestimmten Betriebssituationen auf die Gleitringdichtungsanordnung 1 axiale Relativbewegungen wirken, insbesondere aufgrund von Wärmeausdehnungen der Welle 15, was zu Relativbewegungen in Axialrichtung zwischen der Welle 15 und dem Gehäuse 34 führen kann. Hierbei kann der rotierende Gleitring 2, welcher über den ersten Gleitringträger 20 mit der Welle 15 verbunden ist, eine Axialbewegung F in Axialrichtung X-X ausführen, welche z.B. in Richtung zum Verdichter 16 gerichtet ist. Hierdurch würde sich der Dichtspalt 4 zwischen dem rotierenden Gleitring 2 und dem stationären Gleitring 3 vergrößern. Aufgrund des Druckausgleichsraums 9 und der darin angeordneten Vorspanneinrichtung 5 sowie der Verschiebefläche 32 auf der Hülse 33 kann nun aber der stationäre Gleitring 3 der Bewegung des rotierenden Gleitrings 2 sofort nachfolgen und sich ebenfalls in Richtung der Axialverschiebung des rotierenden Gleitrings 2 bewegen. Dadurch bleibt der Dichtspalt 4 konstant. Da der Axialspalt 7 durch die beiden Bauteile des ersten und zweiten Gleitringträgers 20, 30 gebildet ist, kann verhindert werden, dass hier ein Kontakt zwischen den ersten und zweiten Axialflächen 21, 31, welche den Axialspalt 7 bilden, auftritt, da sich die Gleitringträger 20, 30 gemeinsam mit den Gleitringen 2, 3 bewegen.

Da die erste Breite B1 immer größer als eine Breite des Dichtspalts 4 ist, würde auch bei einem axialen Versetzen des rotierenden Gleitrings 2 in Richtung auf den stationären Gleitring 3 kein Kontakt zwischen der ersten Axialfläche 21 und der zweiten Axialfläche 31 auftreten, da zuerst ein Kontakt der Gleitflächen am rotierenden Gleitring 2 und am stationären Gleitring 3 auftreten würde. Somit kann in keinem Betriebszustand ein Kontakt zwischen der ersten Axialfläche 21 und der zweiten Axialfläche 31 aufkommen, so dass der Axialspalt 7 unabhängig von einer jeweiligen Betriebssituation immer vorhanden ist.

Weiterhin ist an einem Außenumfang des stationären zweiten Gleitringträgers 30 eine Ablaufrinne 11 ausgebildet. Die Ablaufrinne 11 ist zumindest über den halben Umfang des zweiten Gleitringträgers 30 geführt, vorzugsweise über den gesamten Umfang des Gleitringträgers 30 geführt. Die Ablaufrinne 11 dient zum Abführen eines Kondensats, welches in verschiedenen Betriebssituationen aus dem gasförmigen Fluid auskondensieren kann. Das Kondensat kann über die Ablaufrinne 11 nach unten in einen Bereich der Gleitringdichtungsanordnung geführt werden, an welchem ein Ablauf oder dgl. vorgesehen ist.

Wie weiter aus Fig. 1 ersichtlich ist, ist zwischen dem Verdichter 16 und der Gleitringdichtungsanordnung 1 ferner ein Dichtungsbauteil 50 mit einer Labyrinthdichtung 51 an der Welle 15 angeordnet.

Somit kann nun durch das Vorsehen des Axialspalts 7 eine Verschmutzung des Vorraums 8 und insbesondere des Dichtspalts 4 zwischen dem rotierenden und dem stationären Gleitring 2, 3 und der Rückseite der Gleitringe vermieden werden. Durch das Vorsehen des Axialspalts 7 werden Feststoffteilchen oder Flüssigkeitströpfchen, welche in dem von der Druckleitung 17 abgezweigten gasförmigen Fluid vorhanden sein könnten, daran gehindert, sich bis zum Dichtspalt 4 zu bewegen. Da im Betriebsfall der erste Gleitringträger 20 gemeinsam mit der rotierenden Welle 15 und dem rotierenden Gleitring 2 rotiert, ergibt sich am Axialspalt 7 ferner noch eine radial nach außen gerichtete Strömung, welche zusätzlich dazu führt, Feststoffe vom Axialspalt 7 fortzuhalten. Hierbei wird der Axialspalt 7 auch in derartigen Betriebsfällen aufrechterhalten, in denen eine Axialbewegung der Gleitringe auftritt. Selbst in einem derartigen Fall, kann vermieden werden, dass Feststoffe bis zum Vorraum 8 gelangen können. Dadurch wird eine Lebensdauer der Gleitringdichtungsanordnung für gasgeschmierte Gleitringdichtungen signifikant verlängert.

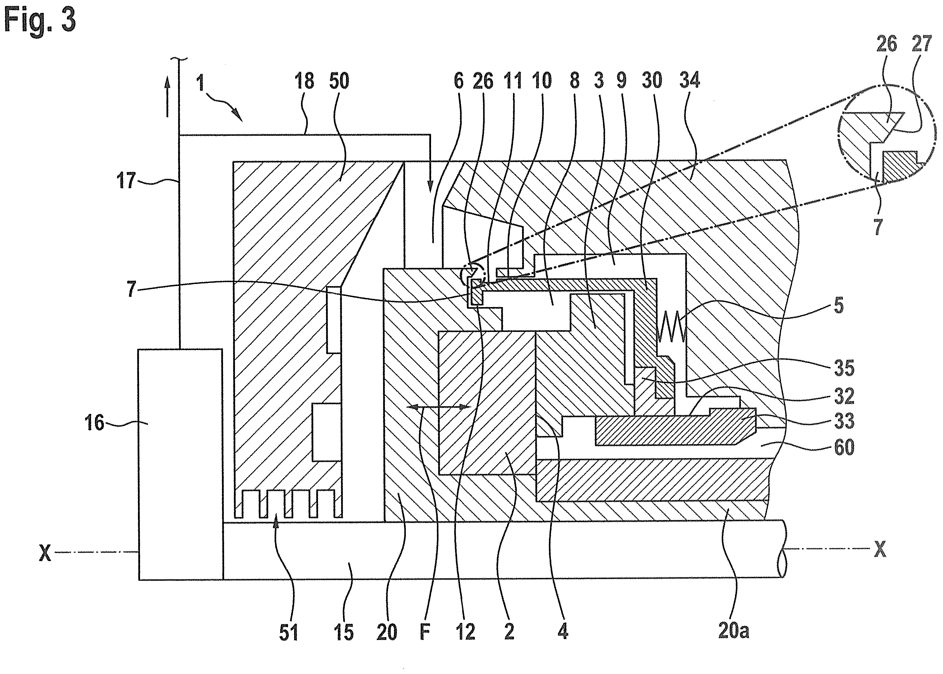

Fig. 3 zeigt eine Gleitringdichtungsanordnung 1 und einen Verdichter 16 gemäß einem zweiten Ausführungsbeispiel der Erfindung,

Im Unterschied zum ersten Ausführungsbeispiel ist beim zweiten Ausführungsbeispiel zusätzlich noch eine Schutzkante 26 am rotierenden ersten Gleitringträger 20 angeordnet. Wie aus Fig. 3 ersichtlich ist, ist die Schutzkante 26 radial außerhalb über dem Axialspalt 7 angeordnet. Hierdurch ist eine zusätzliche Einrichtung vorhanden, welche verhindert, dass Verschmutzungen in den Axialspalt 7 und gegebenenfalls in den Vorraum 8 und insbesondere bis zum Dichtspalt 4 gelangen können. Die Schutzkante 26 weist eine Abschrägung 27 auf, welche in Richtung zum Axialspalt 7 gerichtet ist. Hierdurch können Verschmutzungen an der Schutzkante 26 vermieden werden. Dadurch wird die Gleitringdichtungsanordnung 1 gemäß dem zweiten Ausführungsbeispiel noch schmutzresistenter, wodurch eine Lebensdauer der Gleitringdichtungsanordnung weiter vergrößert werden kann.

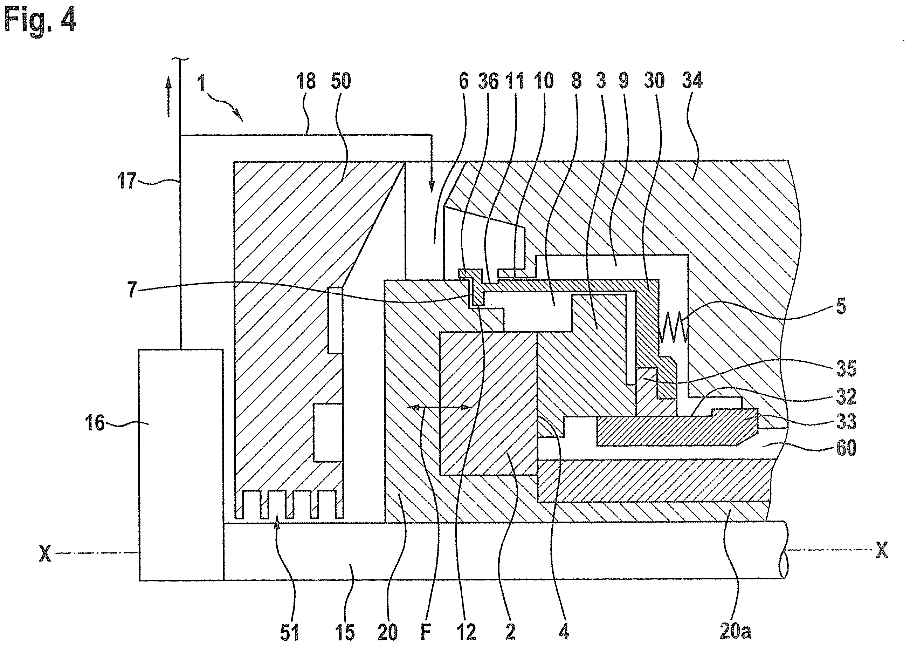

Fig. 4 zeigt eine Gleitringdichtungsanordnung 1 und einen Verdichter 16 gemäß einem dritten Ausführungsbeispiel der Erfindung, Im Unterschied zum zweiten Ausführungsbeispiel ist beim dritten Ausführungsbeispiel eine Schutzkante 36 am stationären zweiten Gleitringträger 30 angeordnet. Wie beim zweiten Ausführungsbeispiel ist die Schutzkante 36 radial außerhalb und über dem Axialspalt 7 angeordnet. Die Funktion ist dabei gleich wie beim zweiten Ausführungsbeispiel, so dass verlässlich verhindert werden kann, dass Schmutzpartikel in den Vorraum 8 und insbesondere bis zum Dichtspalt zwischen dem rotierenden und dem stationären Gleitring gelangen können.

### Bezugszeichenliste

- 1: Gleitringdichtungsanordnung
- 2: rotierenden Gleitring
- 3: stationären Gleitring
- 4: Dichtspalt
- 5: Vorspanneinrichtung
- 6: Fluidraum
- 7: Axialspalt
- 8: Vorraum
- 9: Druckausgleichsraum
- 10: ersten Radialspalt
- 11: Ablaufrinne
- 12: zweiter Radialspalt
- 15: Welle
- 16: Verdichter
- 17: Druckleitung
- 18: Abzweigungsleitung
- 20: erster Gleitringträger
- 20a: Hülsenabschnitt
- 21: erste Axialfläche
- 26: Schutzkante
- 27: Abschrägung
- 30: zweiter Gleitringträger
- 31: zweite Axialfläche
- 32: Verschiebefläche
- 33: Hülse
- 34: Gehäuse
- 35: Nebendichtelement
- 36: Schutzkante
- 50: Dichtungsbauteil
- 51: Labyrinthdichtung
- 60: Atmosphäre
- B1: erste Breite
- B2: zweite Breite
- B3: dritte Breite
- F: Axialbewegung
- L: Länge
- X-X: Axialrichtung

## Patentansprüche

1. Gasgeschmierte Gleitringdichtungsanordnung, welche dazu geeignet ist, ein gasförmiges Fluid als Sperrmedium zu verwenden, umfassend:
- eine Gleitringdichtung mit einem rotierenden Gleitring (2) und einem stationären Gleitring (3), welche zwischen sich einen Dichtspalt (4) definieren,
- eine Vorspanneinrichtung (5), welche den stationären Gleitring (3) in Richtung zum rotierenden Gleitring (2) vorspannt,
- einen Fluidraum (6), welchem das gasförmige Fluid zuführbar ist,
- einen ersten Gleitringträger (20) zum Halten des rotierenden Gleitrings (2), wobei der erste Gleitringträger (20) eine erste Axialfläche (21) aufweist,
- einen zweiten Gleitringträger (30) zum Halten des stationären Gleitrings (3), wobei der zweite Gleitringträger (30) eine zweite Axialfläche (31) aufweist,
- einen Axialspalt (7), welcher durch die erste Axialfläche (21) und die zweite Axialfläche (31) begrenzt ist, und
- einen Vorraum (8), welcher am Dichtspalt (4) der Gleitringdichtung ausgebildet ist und welcher über den Axialspalt (7) mit dem Fluidraum (6) verbunden ist,
**dadurch gekennzeichnet, dass**
- der zweite Gleitringträger (30) und der stationäre Gleitring (3) gemeinsam auf einer Verschiebefläche (32) in Axialrichtung (X-X) verschiebbar angeordnet sind,

2. Gleitringdichtungsanordnung nach Anspruch 1, ferner umfassend eine Hülse (33), welche eine zylindrische Außenfläche aufweist, die die Verschiebefläche (32) bildet.

3. Gleitringdichtung nach einem der vorhergehenden Ansprüche, ferner umfassend einen Druckausgleichsraum (9), welcher über einen ersten Radialspalt (10) mit dem Fluidraum (6) verbunden ist.

4. Gleitringdichtungsanordnung nach einem der vorhergehenden Ansprüche, ferner umfassend eine Schutzkante (26, 36), welche radial außerhalb über dem Axialspalt (7) angeordnet ist.

5. Gleitringdichtungsanordnung nach Anspruch 4, wobei die Schutzkante am ersten Gleitringträger (20) oder am zweiten Gleitringträger (30) vorgesehen ist.

6. Gleitringdichtungsanordnung nach einem der vorhergehenden Ansprüche, wobei ein Verhältnis einer Länge (L) des Axialspalts (7) zu einer Breite (B1) des Axialspalts (7) größer oder gleich 2:1 ist.

7. Gleitringdichtungsanordnung nach einem der vorhergehenden Ansprüche, ferner umfassend eine Ablaufrinne (11), welche an einem Außenumfang des zweiten Gleitringträgers (30) angeordnet ist.

8. Gleitringdichtungsanordnung nach einem der vorhergehenden Ansprüche, wobei der zweite Gleitringträger (30) eine topfförmige Gestalt aufweist.

9. Gleitringdichtungsanordnung nach einem der vorhergehenden Ansprüche, wobei zwischen dem Axialspalt (7) und dem Vorraum (8) ein zweiter Radialspalt (12) angeordnet ist.

10. Gleitringdichtungsanordnung nach Anspruch 9, wobei eine zweite Breite (B2) des zweiten Radialspalts (12) gleich einer Breite (B1) des Axialspalts (7) ist.

11. Verdichter zum Verdichten eines gasförmigen Mediums, umfassend eine Gleitringdichtungsanordnung nach einem der vorhergehenden Ansprüche.

12. Verdichter nach Anspruch 11, ferner umfassend eine Abzweigungsleitung (18), welche von einer Druckleitung (17) des Verdichters zum Fluidraum (6) führt, um gasförmiges Medium aus der Druckleitung (17) zum Fluidraum (6) zuzuführen.

## Claims

1. A gas-lubricated mechanical seal arrangement adapted to use a gaseous fluid as a barrier medium, comprising
- a mechanical seal comprising a rotating slide ring (2) and a stationary slide ring (3) defining a seal gap (4) therebetween,
- a biasing device (5) which biases the stationary slide ring (3) in the direction of the rotating slide ring (2),
- a fluid chamber (6) into which a gaseous fluid can be introduced,
- a first slide ring carrier (20) for retaining the rotating slide ring (2), wherein the first slide ring carrier (20) has a first axial surface (21),
- a second slide ring carrier (30) for retaining the stationary slide ring (3), the second slide ring carrier (30) having a second axial surface (31),
- an axial gap (7) which is limited by the first axial surface (21) and the second axial surface (31), and
- an antechamber (8) which is formed at the sealing gap (4) of the mechanical seal and which is connected to the fluid chamber (6) via the axial gap (7),
**characterized in that**
- the second slide ring carrier (30) and the stationary slide ring (3) are arranged together on a displacement surface (32) so as to be displaceable in the axial direction (X-X).

2. The mechanical seal arrangement according to claim 1, further comprising a sleeve (33) having a cylindrical exterior surface forming the displacement surface (32).

3. The mechanical seal according one of the preceding claims, further comprising a pressure-compensating chamber (9) which is coupled to the fluid chamber (6) via a first radial gap (10).

4. The mechanical seal arrangement according to one of the preceding claims, further comprising a protective edge (26, 36) arranged radially outwardly above the axial gap (7).

5. The mechanical seal arrangement according to claim 4, wherein the protective edge is provided on the first slide ring carrier (20) or on the second slide ring carrier (30).

6. The mechanical seal arrangement according one of the preceding claims, wherein a ratio of a length (L) of the axial gap (7) to a width (B1) of the axial gap (7) is greater than or equal to 2:1.

7. The mechanical seal arrangement according one of the preceding claims, further comprising a drain channel (11) disposed on an outer periphery of the second slide ring carrier (30).

8. The mechanical seal arrangement according one of the preceding claims, said second slide ring carrier (30) having a cup-shaped configuration.

9. The mechanical seal arrangement according one of the preceding claims, wherein a second radial gap (12) is disposed between the axial gap (7) and the antechamber (8).

10. The mechanical seal arrangement according to claim 9, wherein a second width (B2) of said second radial gap (12) is equal to a width (B1) of said axial gap (7).

11. A compressor for compressing a gaseous medium, comprising a mechanical seal arrangement according one of the preceding claims.

12. The compressor according to claim 11, further comprising a branch line (18) leading from a discharge line (17) of the compressor to the fluid chamber (6) for supplying gaseous medium from the discharge line (17) to the fluid chamber (6).

## Revendications

1. Ensemble de joint d'étanchéité à bague de glissement lubrifié au gaz, lequel est adapté pour utiliser le fluide gazeux en tant que milieu de barrage, comprenant :
- un joint d'étanchéité à bague de glissement avec une bague de glissement rotative (2) et une bague de glissement stationnaire (3), lesquelles définissent entre elles une fente d'étanchéité (4),
- un dispositif de précontrainte (5), lequel précontraint la bague de glissement stationnaire (3) en direction de la bague de glissement rotative (2),
- un espace pour fluide (6), auquel le fluide gazeux peut être amené,
- un premier support de bague de glissement (20) destiné à maintenir la bague de glissement rotative (2), dans lequel le premier support de bague de glissement (20) présente une première surface axiale (21),
- un deuxième support de bague de glissement (30) destiné à maintenir la bague de glissement stationnaire (3), dans lequel le deuxième support de bague de glissement (30) présente une deuxième surface axiale (31),
- une fente axiale (7), laquelle est délimitée par la première surface axiale (21) et la deuxième surface axiale (31), et
- une pré-chambre (8), laquelle est réalisée sur la fente d'étanchéité (4) du joint d'étanchéité à bague de glissement et laquelle est reliée à l'espace pour fluide (6) par l'intermédiaire de la fente axiale (7),
**caractérisé en ce que**
- le deuxième support de bague de glissement (30) et la bague de glissement stationnaire (3) sont disposés de manière à pouvoir coulisser ensemble sur une surface de coulissement (32) dans une direction axiale (X-X).

2. Ensemble de joint d'étanchéité à bague de glissement selon la revendication 1, comprenant en outre une douille (33), laquelle présente une surface extérieure cylindrique, qui forme la surface de coulissement (32).

3. Joint d'étanchéité à bague de glissement selon l'une quelconque des revendications précédentes, comprenant en outre un espace de compensation de pression (9), lequel est relié à l'espace pour fluide (6) par l'intermédiaire d'une première fente radiale (10).

4. Ensemble de joint d'étanchéité à bague de glissement selon l'une quelconque des revendications précédentes, comprenant en outre une arête de protection (26, 36), laquelle est disposée radialement à l'extérieur au-dessus de la fente axiale (7).

5. Ensemble de joint d'étanchéité à bague de glissement selon la revendication 4, dans lequel l'arête de protection est prévue sur le premier support de bague de glissement (20) ou sur le deuxième support de bague de glissement (30).

6. Ensemble de joint d'étanchéité à bague de glissement selon l'une quelconque des revendications précédentes, dans lequel un rapport entre une longueur (L) de la fente axiale (7) et une largeur (B1) de la fente axiale (7) est supérieur ou égal à 2:1.

7. Ensemble de joint d'étanchéité à bague de glissement selon l'une quelconque des revendications précédentes, comprenant en outre une rigole d'évacuation (11), laquelle est disposée sur une périphérie extérieure du deuxième support de bague de glissement (30).

8. Ensemble de joint d'étanchéité à bague de glissement selon l'une quelconque des revendications précédentes, dans lequel le deuxième support de bague de glissement (30) présente une configuration en forme de pot.

9. Ensemble de joint d'étanchéité à bague de glissement selon l'une quelconque des revendications précédentes, dans lequel une deuxième fente radiale (12) est disposée entre la fente axiale (7) et la pré-chambre (8).

10. Ensemble de joint d'étanchéité à bague de glissement selon la revendication 9, dans lequel une deuxième largeur (B2) de la deuxième fente radiale (12) est égale à une largeur (B1) de la fente axiale (7).

11. Compresseur pour comprimer un milieu gazeux, comprenant un ensemble de joint d'étanchéité à bague de glissement selon l'une quelconque des revendications précédentes.

12. Compresseur selon la revendication 11, comprenant en outre une conduite de dérivation (18), laquelle mène depuis une conduite de pression (17) du compresseur à l'espace pour fluide (6) pour amener du milieu gazeux provenant de la conduite de pression (17) à l'espace pour fluide (6).
